# EUROPÄISCHE PATENTSCHRIFT

(11) **EP 1 557 320 B1**
(45) Veröffentlichungstag und Bekanntmachung des Hinweises auf die Patenterteilung: **12.09.2007**
(21) Anmeldenummer: 05090050.5
(22) Anmeldetag: 21.07.1999
(51) Int. Cl.: B60R 16/02

(54) **Verfahren und Steuereinrichtung zur Bedienung technischer Einrichtungen eines Fahrzeugs**
Procedure and control device for operating vehicle technical devices
Procédé et dispositf de commande pour l'utilisation de dispositifs techniques dans un véhicule

(30) Priorität: 29.08.1998 DE 19839466
(43) Veröffentlichungstag der Anmeldung: 27.07.2005
(62) Teilanmeldung aus: 99114185.4
(73) Patentinhaber: Volkswagen AG, 38436 Wolfsburg (DE)
(72) Erfinder: Crull, Torsten, 38531 Rötgesbüttel (DE)
(74) Vertreter: Zucker, Volker

(56) Entgegenhaltungen:
- WO-A-96/21185
- DE-A1- 19 503 920
- US-A- 4 827 520

## Beschreibung

Die Erfindung betrifft ein Verfahren zur Bedienung technischer Einrichtungen eines Fahrzeugs gemäß Oberbegriff des Anspruchs 1 sowie eine Steuereinrichtung zur Durchführung des Verfahrens nach einem der Ansprüche 1 bis 4.

Es ist allgemein bekannt, elektrische Einrichtungen durch eine aufeinanderfolgende Eingabe von Bedienanweisungen zu bedienen. Dabei können die Bedienanweisungen beispielsweise über die Tastatur eines elektrischen Gerätes oder über eine Infrarot-Fernbedienung eingegeben werden. Weiterhin ist es auch bekannt, einfache elektrische Funktionen durch akustische Signale auszulösen, beispielsweise den Weckton eines Weckers durch Zuruf abzustellen.

Aus der DE 40 12 337 A1 ist ein Verfahren zur Spracherkennung bekannt, mit dem die charakteristischen Merkmale unterschiedlicher Wörter identifiziert und mit den Merkmalen anderer Wörter eines Vokabulars verglichen werden können. In das Vokabular lassen sich auch neue Wörter mit den zugehörigen charakteristischen Merkmalen aufnehmen, so dass die Bedienperson sich ein individuelles Vokabular aufbauen kann. Die Bedeutung eines gesprochenen Worts lässt sich dann durch einen Vergleich mit dem Vokabular ermitteln, so dass das gesprochene Wort dann als geschriebenes Wort an einem Bildschirm zur Anzeige gebracht werden kann.

Aus der US-PS 4,509,133 ist ein weiteres Spracherkennungssystem bekannt, welches trainierbar ist, d. h. ein gesprochenes Wort wird so oft wiederholt, bis das von der Spracherkennungseinrichtung angezeigte Wort richtig ist. Das gesprochene Wort wird dann in codierter Form als Referenz für das entsprechende Wort in das Vokabular der Spracherkennungseinrichtung aufgenommen. Wird nun das Wort erneut in gesprochener Form eingegeben, so kann die Spracherkennungseinrichtung die korrekte Bedeutung des Wortes anhand des abgespeicherten Vokabulars bestimmen.

Aus der DE 195 03 920 A1 (Oberbegriff von Anspruch 1 bzw. 3) ist eine Einstelleinrichtung mit einem Bedienschalter bekannt, über den mehrere, jeweils in unterschiedliche Funktionsstellungen steuerbare Funktionselemente gleichzeitig in eine jeweilige, benutzerseitig variabel vorgebbare Funktionsstellung steuerbar sind, wobei die vom Bedienschalter ansteuerbaren Funktionselemente benutzerseitig variabel aus einer Funktionselementgesamtheit auswählbar sind. So kann bei einem Einsatz dieser Einrichtung in einem Fahrzeug der Bedienschalter vom Benutzer beispielsweise nach seiner Wahl als Tunnel-Schalter, als Hitzestau-Schalter oder als Waschgaragenschalter konfiguriert werden. Im ersteren Fall kann der Benutzer z.B. aus den im Fahrzeug vorhandenen Funktionselementen die Fensterheber, ein eventuelles Schiebehebedach-Stellelement, ein Luftzufuhrfilter, die Abblendlichteinheit, die Innenlichteinheit sowie einen Radio-/Kassettenteil auswählen. Im zweiten Fall kann er z.B. dem Bedienschalter das Schiebehebedach-Stellelement, eine Klimaanlageneinheit, eine Gebläseeinheit, die Fensterheber und einen eventuellen Heckrolloantrieb zuordnen. Im dritten Fall kommt beispielsweise die Zuordnung der Fensterheber, eines Antennenantriebs, eines Peilstabantriebs, einer Außenspiegelverstelleinheit, der Innenlichteinheit und des Schiebehebedach-Stellelements zum Bedienschalter in Betracht. Es können also durch Betätigung eines Bedienschalters mehrere technische Einrichtungen gleichzeitig angesteuert werden.

Aus der WO 96/21185 A1 sowie der US-4,827,520 sind jeweils Spracherkennungssysteme zur Bedienung verschiedener Einrichtungen bekannt. Dabei kann beispielsweise unter einem Codewort eine Telefonnummer abgelegt werden.

Der Erfindung liegt die Aufgabe zugrunde, ein Verfahren zur Bedienung technischer Einrichtungen eines Fahrzeuges zu schaffen, bei dem der Bedienvorgang für die technischen Einrichtungen an die individuellen Anforderungen eines Bedieners leicht angepasst werden kann.

Die Lösung dieser Aufgabe erhält man durch die im Anspruch 1 angegebenen Merkmale. Hierzu sieht das Verfahren zur Bedienung technischer Einrichtungen eines Fahrzeugs vor, dass Bedienanweisungen mit gespeicherten Befehlen verglichen werden und bei vorhandener ausreichender Übereinstimmung zwischen einer Bedienanweisung und einem gespeicherten Befehl der entsprechende Befehl dieser Bedienanweisung zugeordnet und ein zugeordneter Bedienvorgang ausgeführt wird, wobei mehrere aufeinanderfolgende Bedienanweisungen als eine Befehlsfolge unter einem Codewort abgespeichert werden, wobei dann über die Eingabe des Codeworts die selbsttätige Ausführung der Befehlsfolge mit den entsprechenden Bedienvorgängen veranlasst wird, wobei unter dem Codewort Bedienanweisungen für mehrere technische Einrichtungen abgespeichert sind, wobei zum Initiieren unterschiedlicher Befehlsfolgen eine der Anzahl der Befehlsfolgen entsprechende Anzahl von unterschiedlichen Codewörtern abgespeichert ist, wobei die Eingabe des Codeworts zur Ausführung der Befehlsfolge in Sprachform erfolgt. Die Bedienperson hat beispielsweise die Möglichkeit, unter einem frei wählbaren Codewort eine Befehlsfolge abzuspeichern, mit der die Seitenfenster und das Schiebedach eines Fahrzeugs geschlossen und darauf hin die Klimaanlage eingeschaltet werden kann. Das Codewort bildet somit einen Makrobefehl, mit dem die zugehörige Befehlsfolge abgerufen und die Ausführung der zugehörigen Bedienvorgänge veranlasst werden kann.

Da die einzelnen Bedienanweisungen von der Bedienperson im Rahmen einer individuellen Befehlsfolge unter einem Codewort abgespeichert werden können, lässt sich die automatische Bedienung technischer Einrichtungen bequem an die individuellen Wünsche und Gewohnheiten der Bedienperson anpassen.

Die Eingabe der einzelnen Bedienanweisungen kann über eine Tastatur des Bordcomputers und/oder unter Verwendung eines Spracherkennungssystems erfolgen. Für unterschiedliche Bedienvorgänge sind unterschiedliche Befehlsfolgen unter unterschiedlichen Codewörtern abgespeichert.

Zur Durchführung des erfindungsgemäßen Verfahrens wird eine Steuereinrichtung mit einem Spracherkennungssystem mit den Merkmalen des Anspruchs 3 verwendet. Die zu jeder Befehlsfolge gehörenden Codewörter werden in einem Makrospeicher abgelegt, der auch Teil eines umfassenderen Vokabelspeichers sein kann. Eine zentrale Steuereinheit vergleicht ein eingegebenes Codewort mit den abgespeicherten Codewörtern und veranlasst über eine Bedienschnittstelle die zu dem eingegebenen Codewort zugehörenden aufeinanderfolgenden Bedienvorgänge. Die Bedienschnittstelle kann zur Betätigung eines Autotelefons und/oder zur Betätigung unterschiedlicher elektrischer Einrichtungen eines Fahrzeugs geeignet sein, so daß mit der Steuereinrichtung unterschiedliche Bedienvorgänge jeweils durch Eingabe eines einzigen Codeworts veranlaßt werden können.

Die über einen Sprachwandler eingegebenen gesprochenen Eingaben oder die über eine Tastatur vorgenommenen Eingaben können von dem Sprachwandler als Digitalwärter der zentralen Steuereinheit zugeführt werden. Damit die zentrale Steuereinheit einen Dialog mit der Bedienperson führen kann, ist es vorteilhaft, wenn die zentrale Steuereinheit mit einem Dialogsystem verbunden ist, welches Anweisungen für die Eingabe der Bedienvorgänge an eine Ausgabeeinheit liefert. Die Ausgabeeinheit kann die Anweisungen visuell, beispielsweise an einem Display, oder akustisch über einen Lautsprecher wiedergeben. In Verbindung mit dem Dialogsystem können auch kompliziertere Abläufe von der Bedienperson problemlos durchgeführt werden. Die von der Bedienperson durchgeführten Schritte werden einzeln vorgegeben und können gegebenenfalls vom Dialogsystem auch zusätzlich noch näher erläutert werden.

Die Steuereinrichtung ist vorzugsweise über eine Bedienschnittstelle mit den zu betätigenden elektrischen Antriebsmotoren und/oder dem Autotelefon verbunden, wobei die Bedienschnittstelle die von einer zentralen Steuereinheit ausgegebenen Befehlsfolgen in geeignete elektrische Steuersignale zur Betätigung der entsprechenden elektrischen Einrichtungen umwandelt. An die Bedienschnittstelle können sehr unterschiedliche elektrische Einrichtungen angeschlossen sein, so daß die Steuereinrichtung sehr universell für die unterschiedlichen Bedienvorgänge einsetzbar ist.

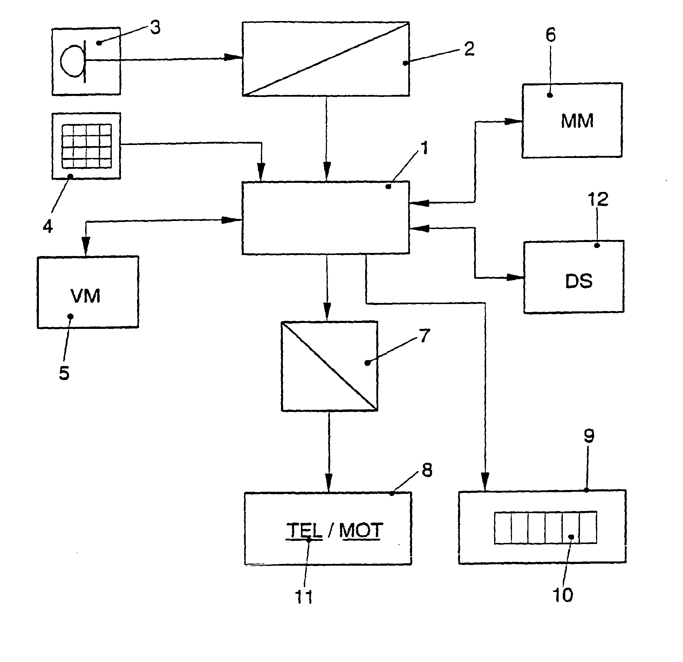

Die Erfindung wird nachfolgend anhand eines in der Zeichnung dargestellten Blockschaltbildes einer Steuereinrichtung mit einem Spracherkennungssystem näher erläutert.

Das in der Zeichnung dargestellte Ausführungsbeispiel einer Steuereinrichtung mit einem Spracherkennungssystem besitzt eine zentrale Steuereinheit 1, die eingangsseitig über einen Sprachwandler 2 mit einem Mikrofon 3 verbunden ist. An einem zweiten Eingang der zentralen Steuereinheit 1 ist eine Tastatur 4 angeschlossen, so daß über die Tastatur 4 eine manuelle Eingabe und über das Mikrofon 3 eine gesprochene Eingabe erfolgen kann.

Die zentrale Steuereinheit 1 ist außerdem mit einem Vokabularspeicher 5 und mit einem Makrospeicher 6 verbunden. Im Vokabularspeicher 5 kann ein Standardvokabular in digitaler Form abgespeichert sein, welches zur Identifizierung der über das Mikrofon 3 eingegebenen Wörter herangezogen wird. Die Identifizierung der eingegebenen gesprochenen Bedienanweisungen kann dabei in an sich bekannter Weise durch einen Vergleich der charakteristischen Merkmale des eingegebenen Worts mit den im Vokabularspeicher 5 abgelegten Wörtern erfolgen. Das im Vokabularspeicher 5 enthaltene Standardvokabular kann von einer Bedienperson auch erweitert werden.

Im Makrospeicher 6 können Befehlsfolgen unter zugeordneten Codewörtern abgespeichert sein. Wird ein Codewort beispielsweise über das Mikrofon 3 in Sprachform eingegeben, so kann die zentrale Spracheinheit 1 die Übereinstimmung mit dem entsprechenden Codewort im Makrospeicher 6 feststellen und die zugehörige Befehlsfolge abrufen, mit der dann beispielsweise sämtliche Seitenfenster und das Schiebedach eines Fahrzeugs geschlossen werden. Zu diesem Zweck gibt die zentrale Steuereinheit ausgangsseitig über eine Bedienschnittstelle 7 die dazu erforderlichen Steuersignale an die zu betätigenden elektrischen Einrichtung 8 ab. In dem gewählten Beispiel sind die elektrischen Einrichtung 8 die Antriebsmotoren für die Seitenfenster und das Schiebedach.

Die zentrale Steuereinheit 1 ist außerdem mit einer Ausgabeeinheit 9 ausgangsseitig verbunden, über die akustische und/oder visuelle Informationen der Bedienperson übermittelt werden. Die Ausgabeeinheit 9 kann zu diesem Zweck mit einem Display 10 und einer hier nicht dargestellten Lautsprecheranordnung bestückt sein.

Anhand eines Bedienbeispiels zur Herstellung einer Fernsprechverbindung wird nun das erfindungsgemäße Verfahren näher erläutert. Die Telefoneinrichtung 11, die einen Teil der steuerbaren elektrischen Einrichtung 8 darstellt, soll sprachgesteuert bedient werden.

Über das Mikrofon 3 wird zunächst das Wort Telefon" eingegeben, welches von der zentralen Steuereinheit 1 identifiziert wird. Daraufhin schaltet die Steuereinheit 1 das Autotelefon 11 ein. Über das Mikrofon 3 kann dann die gewünschte Telefonnummer eingegeben werden, wobei die zentrale Steuereinheit 1 wiederum jedem gesprochenen Zahlwort eine entsprechende Zahl zuordnet und diese an das Autotelefon 11 als Wählinformationen weitergibt.

Als nächster Schritt kann von der Bedienperson das Wort "wählen" eingegeben werden, welches wiederum von der zentralen Steuereinheit 1 identifiziert wird, worauf von der zentralen Steuereinheit 1 der Wählvorgang am Autotelefon 1 initüert wird.

Sollten sich bei der Eingabe der einzelnen gesprochenen Bedienanweisungen für das Spracherkennungssystem irgendwelche Probleme ergeben, so kann über ein mit der zentralen Steuereinheit 1 verbundenes Dialogsystem 12 eine Benutzerführung erfolgen. Das Dialogsystem 12 kann zu diesem Zweck Informationen an die Bedienperson über die Ausgabeeinheit 9 abgeben, um beispielsweise die Bedienperson zur nochmaligen Eingabe aufzufordern.

Die zum Aufbau der Wählverbindung erforderlichen, über das Mikrofon 3 eingegebenen Bedienanweisungen können als eine Befehlsfolge in codierter Form im Makrospeicher 6 unter einem Codewort abgespeichert werden. Beispielsweise können die zum Aufbau der Telefonverbindung zum eigenen Sekretariat notwendigen Bedienanweisungen unter dem Codewort "Sekretariat" im Makrospeicher 6 abgelegt werden. Wünscht nun eine Bedienperson eine Telefonverbindung zum eigenen Sekretariat, so kann der gesamte Ablauf durch Eingabe des Codeworts "Sekretariat" aufgerufen werden.

Das Dialogsystem 12 kann am Ende einer Eingabe von mehreren Bedienanweisungen die Bedienperson fragen, ob die Bedienanweisungen als Befehlsfolge unter einem Codewort abgespeichert werden sollen. Antwortet die Bedienperson mit "ja", so fragt das Dialogsystem 12 über die Ausgabeeinheit 9 nach dem Codewort. Die Bedienperson gibt dann das entsprechende individuelle Codewort ein.

Die Eingabe des Codeworts kann ebenso wie die Eingabe der Bedienanweisungen über das Mikrofon 3 und/oder über die Tastatur 4 erfolgen.

Das Spracherkennungssystem mit dem Makrospeicher 6 ermöglicht das Ablegen unterschiedlicher Befehlsfolgen, die zur Bedienung unterschiedlicher komplexer Vorgänge geeignet sind. Jeder Befehlsfolge wird ein individuelles Codewort zugeordnet, so daß die entsprechenden Bedienvorgänge ggf. von anderen Personen nicht ohne Kenntnis des Codeworts abgerufen werden können. Die eingegebenen Bedienvorgänge können somit vor unerlaubtem Zugriff geschützt werden.

## Patentansprüche

1. Verfahren zur Bedienung technischer Einrichtungen eines Fahrzeugs, wobei Bedienanweisungen mit gespeicherten Befehlen verglichen werden und bei vorhandener ausreichender Übereinstimmung zwischen einer Bedienanweisung und einem gespeicherten Befehl der entsprechende Befehl dieser Bedienanweisung zugeordnet und es ein zugeordneter Bedienvorgang ausgeführt wird, wobei mehrere aufeinanderfolgende Bedienanweisungen als eine Befehlsfolge unter einem Codewort abgespeichert werden, und dass dann über die Eingabe des Codeworts die selbsttätige Ausführung der Befehlsfolge mit den entsprechenden Bedienvorgängen veranlasst wird, wobei unter dem Codewort Bedienanweisungen für mehrere technische Einrichtungen abgespeichert sind,
**dadurch gekennzeichnet, dass**
zum Initiieren unterschiedlicher Befehlsfolgen eine der Anzahl der Befehlsfolgen entsprechende Anzahl von unterschiedlichen Codewörtern abgespeichert ist, wobei die Eingabe des Codewortes zur Ausführung der Befehlsfolge in Sprachform erfolgt.

2. Verfahren nach Anspruch 1, **dadurch gekennzeichnet, dass** die Bedienanweisungen zur Speicherung manuell oder in Sprachform eingegeben werden.

3. Steuereinrichtung zur Durchführung des Verfahrens nach einem der vorhergehenden Ansprüche mit einem Spracherkennungssystem, das in einer zentralen Steuereinheit (1) die in einem Speicher (5, 6) als Wörter abgelegten Befehle mit eingegebenen Bedienanweisungen vergleicht, wobei in einem Makrospeicher (6), der mit der zentralen Steuereinheit (1) verbunden ist, zu jeder Befehlsfolge ein Codewort abgespeichert ist, und das bei ausreichender Übereinstimmung eines in Sprachform eingegebenen mit einem abgespeicherten Codewort die zentrale Steuereinheit (1) über eine Bedienschnittstelle (7) die aufeinanderfolgenden Bedienvorgänge durchführt,
**dadurch gekennzeichnet, dass**
unter dem Codewort Bedienanweisungen für mehrere technische Einrichtungen abgespeichert sind und zum Initiieren unterschiedlicher Befehlsfolgen eine der Anzahl der Befehlsfolgen entsprechende Anzahl von unterschiedlichen Codewörtern abgespeichert ist.

4. Steuereinrichtung nach Anspruch 3, **dadurch gekennzeichnet, dass** die Bedienanweisungen und/oder die Codewörter über einen Sprachwandler (2), der die gesprochenen Eingaben in Digitalwörter umwandelt, der zentralen Steuereinheit (1) zugeführt werden.

5. Steuereinrichtung nach einem der Ansprüche 3 oder 4, **dadurch gekennzeichnet, dass** die zentrale Steuereinheit (1) mit einem Dialogsystem (12) verbunden ist, das Anweisungen für die Eingabe der Bedienvorgänge an eine Ausgabeeinheit (9) liefert.

6. Steuereinrichtung nach Anspruch 5, **dadurch gekennzeichnet, dass** die Ausgabeeinheit (9) als eine visuelle Anzeige und/oder eine akustische Ausgabeeinrichtung ausgebildet ist.

7. Steuereinrichtung nach einem der Ansprüche 3 bis 6, **dadurch gekennzeichnet, dass** die Bedienschnittstelle (7) ausgangsseitig mit einem Autotelefon (11) und/oder mit elektrischen Antriebsmotoren und/oder mit anderen elektrischen Einrichtungen des Fahrzeugs verbunden ist.

## Claims

1. Method for operating technical devices of a vehicle, wherein operating instructions are compared with stored commands and when there is sufficient correspondance between an operating instruction and a stored command the corresponding command is assigned to this operating instruction and an assigned operating process is carried out, wherein a plurality of successive operating instructions are stored as a command sequence under a code word, and in that by inputting the code word the automatic execution of the command sequence with the corresponding operating processes is initiated, wherein operating instructions for a plurality of technical devices are stored under the code word, **characterized in that** in order to initiate different command sequences a number of different code words which correspond to the number of command sequences is stored, wherein the inputting of the code word in order to execute the command sequence is carried out in speech form.

2. Method according to Claim 1, **characterized in that** the operating instructions for the storage operation are input manually or in speech form.

3. Control device for carrying out the method according to one of the preceding claims with a speech recognition system which compares the commands stored as words in a memory (5, 6) with input operating instructions in a central control unit (1), wherein a code word for each command sequence is stored in a macro memory (6) which is connected to the central control unit (1), and in that when there is sufficient correspondance between a code word which has been input in speech form and a stored code word the central control unit (1) carries out the successive operating processes via an operating interface (7), **characterized in that** operating instructions for a plurality of technical devices are stored under the code word, and in order to initiate different command sequences a number of different code words corresponding to the number of command sequences is stored.

4. Control device according to Claim 3, **characterized in that** the operating instructions and/or the code words are fed to the central control unit (1) via a speech converter (2) which converts the spoken inputs into digital words.

5. Control device according to one of Claims 3 or 4, **characterized in that** the central control unit (1) is connected to a dialogue system (12) which supplies instructions for the inputting of the operating processes to an output unit (9).

6. Control device according to Claim 5, **characterized in that** the output unit (9) is embodied as a visual display and/or an acoustic output device.

7. Control device according to one of Claims 3 to 6, **characterized in that** the operating interface (7) is connected at the output end to a car telephone (11) and/or to electric drive motors and/or to other electric devices of the vehicle.

## Revendications

1. Procédé pour utiliser des dispositifs techniques d'un véhicule, selon lequel des instructions de commande sont comparées à des ordres mémorisés et en cas de concordance suffisante entre une instruction de commande et un ordre mémorisé, l'ordre correspondant est attribué à cette instruction de commande et une opération de commande attribuée est exécutée, selon lequel plusieurs instructions de commande consécutives sont mémorisées en tant que succession d'ordres sous un mot de code et ensuite l'exécution automatique de la succession d'ordres est ordonnée avec les opérations de commande correspondantes par l'introduction du mot de code, selon lequel des instructions de commande sont mémorisées pour plusieurs dispositifs techniques sous le mot de code, **caractérisé en ce que** pour initialiser les différentes successions d'ordres un nombre de mots de code différents correspondant au nombre de successions d'ordres est mémorisé, l'introduction du mot de code pour exécuter la succession d'ordres se faisant sous une forme vocale.

2. Procédé selon la revendication 1, **caractérisé en ce que** les instructions de commande pour mémorisation sont introduites manuellement ou sous une forme vocale.

3. Dispositif de commande pour exécuter le procédé selon une des revendications précédentes avec un système de reconnaissance vocale qui compare dans une unité centrale de commande (1) les ordres déposés dans une mémoire (5, 6) sous forme de mots aux instructions de commande introduites, selon lequel, dans une macromémoire (6) reliée à l'unité centrale de commande (1), un mot de code est mémorisé pour chaque succession d'ordres et en cas de concordance suffisante d'un mot de code introduit sous forme vocale avec un mot de code mémorisé, l'unité centrale de commande (1) effectue les opérations de commande successives au moyen d'une interface de commande (7), **caractérisé en ce que** des instructions de commandes sont mémorisées sous le mot de code pour plusieurs dispositifs techniques et pour initialiser différentes successions d'ordres un nombre de mots de code différents correspondant au nombre des successions d'ordres est mémorisé.

4. Dispositif de commande selon la revendication 3 **caractérisé en ce que** les instructions de commande et/ou les mots de code sont acheminés à l'unité centrale de commande (1) par un convertisseur vocal (2), qui convertit les introductions parlées en mots numériques.

5. Dispositif de commande selon la revendication 3 ou 4, **caractérisé en ce que** l'unité centrale de commande (1) est reliée à un système de dialogue (12) qui fournit des instructions pour l'introduction des opérations de commande à une unité de sortie (9).

6. Dispositif de commande selon la revendication 5, **caractérisé en ce que** l'unité de sortie (9) est constituée sous la forme d'un affichage visuel et/ou d'un système de sortie acoustique.

7. Dispositif de commande selon l'une des revendications 3 à 6, **caractérisé en ce que** l'interface de commande (7) est reliée du côté de la sortie avec un téléphone de voiture (11) et/ou avec des moteurs de commande électriques et/ou avec d'autres dispositifs électriques du véhicule.
